# FASCICULE DE BREVET EUROPEEN

(11) **EP 0 578 567 B1**
(45) Date de publication et mention de la délivrance du brevet: **18.10.1995**
(21) Numéro de dépôt: 93401758.3
(22) Date de dépôt: 06.07.1993
(51) Int. Cl.: F01P 7/04, H02P 7/68

(54) **Dispositif de commutation pour la commande de deux moteurs électriques à différents vitesses**
Kommutationsvorrichtung zur Steuerung von zwei elektrischen Motoren mit verschiedenen Geschwindigkeiten
Speed commutation device for two electric motors with different speeds

(30) Priorité: 09.07.1992 FR 9208542
(43) Date de publication de la demande: 12.01.1994
(73) Titulaire: VALEO THERMIQUE MOTEUR, 78320 Le Mesnil Saint-Denis (FR)
(72) Inventeur: Couetoux, Hervé, F-78000 Versailles (FR)
(74) Mandataire: Gamonal, Didier

(56) Documents cités:
- EP-A- 0 445 015
- FR-A- 2 381 350
- GB-A- 628 828
- US-A- 4 988 930

## Description

L'invention concerne un ensemble comprenant deux moteurs électriques à courant continu et des moyens de commutation permettant de raccorder sélectivement les enroulements des deux moteurs à une source de tension continue de façon à obtenir pour chacun d'eux différents régimes de fonctionnement parmi lesquels au moins un régime de rotation à une vitesse inférieure à sa vitesse nominale sous la tension de ladite source.

Des moteurs électriques sont utilisés en particulier pour entraîner des ventilateurs destinés au refroidissement des moteurs thermiques de véhicules automobiles. On souhaite fréquemment obtenir, en fonction de la charge du moteur thermique et des conditions climatiques, différents régimes de fonctionnement de ces moteurs électriques correspondant à différents niveaux d'efficacité du refroidissement, à savoir un régime d'arrêt du moteur, un régime de rotation à une vitesse nominale et au moins un régime intermédiaire.

EP-A-445015 décrit un dispositif de commutation permettant d'obtenir de tels régimes différents pour un moteur de ventilateur à quatre balais en alimentant celui-ci directement sous la tension de la source, c'est-à-dire sans avoir recours à une résistance pour l'abaissement de cette tension.

Certaines installations de refroidissement utilisent par ailleurs deux groupes motoventilateurs, qui doivent alors être commandés tous les deux selon différents régimes.

US-A-4 988 930 décrit un ensemble comprenant deux moteurs électriques et des moyens de commutation permettant une telle commande des deux moteurs. Dans ce document, un premier moteur comporte deux enroulements indépendants, l'un de ces enroulements pouvant être alimenté seul sous la tension d'une source, grâce aux moyens de commutation, pour faire tourner le moteur à une grande vitesse, et les deux enroulements pouvant être alimentés en série sous cette même tension pour une rotation à petite vitesse. Le second moteur comporte un enroulement unique raccordé en permanence en parallèle avec le premier enroulement du premier moteur de façon à être alimenté sous la tension de la source ou sous une tension réduite et à tourner à une grande vitesse ou à une petite vitesse en même temps que le premier moteur.

Dans le second régime de fonctionnement de cet ensemble connu, un seul des deux enroulements en série du premier moteur est en parallèle avec l'enroulement du second moteur, ce qui entraîne un déséquilibre dans l'alimentation du premier moteur.

Un but de l'invention est de remédier à cet inconvénient.

Un autre but est de permettre l'utilisation, dans un ensemble à deux moteurs, d'un moteur à quatre balais du type de celui utilisé dans EP-A-445015.

L'invention vise notamment un ensemble du genre défini en introduction, comprenant un premier moteur à quatre balais dont la vitesse nominale est obtenue en reliant des premier et troisième balais à une première polarité de la source et des second et quatrième balais à la seconde polarité de la source, le premier balai étant relié en permanence à la première polarité et les second, troisième et quatrième balais pouvant être reliés aux polarités correspondantes de la source par les moyens de commutation, et un second moteur à deux balais dont l'un est relié en permanence à la première polarité et l'autre à l'un des troisième et quatrième balais du premier moteur.

D'autres caractéristiques, complémentaires, de l'invention sont énoncées ci-après :
- L'autre balai du second moteur est relié au quatrième balai du premier moteur.
- Les moyens de commutation comprennent des premier, second et troisième interrupteurs reliant respectivement les second, troisième et quatrième balais du premier moteur aux polarités correspondantes de la source.
- Les moyens de commutation comprennent en outre des moyens de commande propres à commander l'ouverture simultanée des trois interrupteurs pour obtenir l'arrêt des deux moteurs et la fermeture au moins du premier interrupteur pour obtenir la rotation de l'un au moins des moteurs.
- Les moyens de commande sont propres à commander la fermeture de l'un au moins des second et troisième interrupteurs en même temps que celle du premier.
- Les moyens de commande sont propres à commander la fermeture simultanée des trois interrupteurs.
- Les moyens de commande sont propres à commander la fermeture au moins du troisième interrupteur indépendamment de celle du premier.
- Les moyens de commutation comprennent des premier et second interrupteurs reliant respectivement les second et quatrième balais du premier moteur aux polarités correspondantes de la source.
- Les moyens de commutation comprennent en outre des moyens de commande propres à commander une ouverture simultanée des deux interrupteurs pour obtenir l'arrêt des deux moteurs et la fermeture au moins du premier interrupteur pour obtenir la rotation de l'un au moins des moteurs.

L'ensemble selon l'invention, notamment en vue du refroidissement du moteur thermique d'un véhicule automobile, peut également comprendre deux hélices de ventilateurs entraînées respectivement par les deux moteurs.

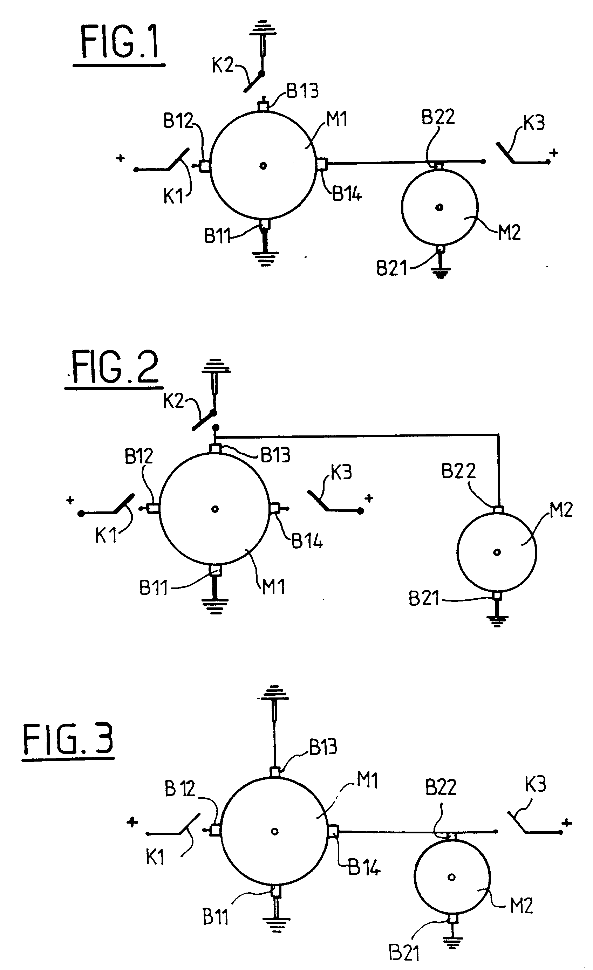

D'autres caractéristiques et avantages de l'invention apparaîtront à l'examen de la description détaillée ci-après, et des dessins annexés, sur lesquels les figures 1 à 3 sont des schémas électriques relatifs à trois ensembles selon l'invention, montrant les deux moteurs et les trois interrupteurs (figures 1 et 3) et les deux moteurs et les deux interrupteurs (figure 3).

Les deux ensembles illustrés aux figures 1 et 2 comprennent les deux mêmes moteurs à courant continu, à savoir un premier moteur M1 à quatre balais B11, B12, B13, B14 et un second moteur M2 à deux balais B21 et B22, ainsi que trois interrupteurs K1, K2, K3. La vitesse de rotation nominale du moteur M1 est obtenue en reliant les balais B11 et B13 à la polarité négative d'une source de tension continue et les balais B12 et B14 à la polarité positive de celle-ci, des vitesses de rotation plus faibles pouvant être obtenues en supprimant l'une des liaisons à l'une au moins des polarités.

Le balai B11 est relié en permanence à la masse d'un véhicule, elle-même reliée à la polarité négative de la batterie de bord, et les balais B12, B13 et B14 peuvent être reliés respectivement à la borne + de la batterie, à la masse et à la borne + respectivement par les interrupteurs K1, K2 et K3.

Le balai B21 du moteur M2 est également relié en permanence à la masse, et le balai B22 au balai B14 à la figure 1 et au balai B13 à la figure 2.

Dans la figure 1, les interrupteurs K1, K2 et K3 sont représentés ouverts. Dans ces conditions, les deux moteurs sont déconnectés du pôle positif de la batterie et sont donc arrêtés.

Si l'on ferme les trois interrupteurs, les quatre balais du moteur M1 et les deux balais du moteur M2 sont reliés aux pôles appropriés de la batterie, de sorte que les deux moteurs tournent à leur vitesse nominale. Si ces moteurs entraînent des ventilateurs pour le refroidissement d'un moteur thermique, les ventilateurs présentent alors leur capacité de refroidissement maximale.

Si on ferme seulement l'interrupteur K1, seuls les balais B11 et B12 du moteur M1 sont reliés aux pôles - et + respectivement de la batterie. Ce moteur tourne donc à une vitesse réduite. Par ailleurs, le balai B14 est porté par induction à un potentiel positif inférieur à celui du pôle +, qui est transmis au balai B22 du moteur M2. Celui-ci tourne donc lui aussi à vitesse réduite.

Si on ferme seulement l'interrupteur K3, l'alimentation du moteur M1 est voisine de celle du cas précédent, de sorte qu'il tourne à une vitesse réduite. En revanche, le moteur M2 est alimenté directement sous la tension de la source et tourne à sa vitesse nominale.

Si, en plus de l'interrupteur K3, on ferme l'un seulement des interrupteurs K1 et K2, le moteur M1 a trois balais reliés à la source et tourne à une vitesse intermédiaire entre la vitesse réduite précédente et la vitesse nominale, le moteur M2 tournant toujours à sa vitesse nominale.

Enfin, il est également possible de fermer seulement les interrupteurs K1 et K2 pour faire tourner les deux moteurs à des vitesses réduites différentes de celles des cas précédents.

En fonction des capacités de refroidissement souhaitées, on peut prévoir des moyens de commande (non représentés) pour commander tout ou partie des états des interrupteurs décrits ci-dessus.

A la figure 2, les interrupteurs K1, K2 et K3 sont également représentés ouverts. Aucun des moteurs n'est alimenté et tous deux sont arrêtés. Les branchements du moteur M1 étant les mêmes qu'à la figure 1, ses régimes de fonctionnement selon les états des interrupteurs sont les mêmes. En revanche, le moteur M2 n'est jamais alimenté sous la tension de la source. Lorsque l'interrupteur K2 est fermé, les balais B21 et B22 sont tous deux à la masse et le moteur est arrêté. Lorsque l'interrupteur K2 est ouvert et que l'un au moins des interrupteurs K1 et K3 est fermé, le balai B13 est porté par induction à un potentiel positif inférieur à celui de la source et le moteur M2 tourne à une vitesse réduite.

Dans la forme de réalisation de la figure 3, à laquelle on se réfère maintenant, l'ensemble s'apparente à celui de la figure 1, si ce n'est que l'interrupteur K2 est supprimé. Le balai B13 est donc en permanence relié à la polarité négative de la source de tension. Dans la position représentée, dans laquelle les interrupteurs K1 et K3 sont ouverts, aucun des moteurs n'est alimenté et tous deux sont arrêtés. Lorsque l'interrupteur K1 est fermé et l'interrupteur K3 est ouvert, les deux moteurs tournent à des vitesses réduites. Lorsque les deux interrupteurs K1 et K3 sont fermés, les deux moteurs tournent à leur vitesse nominale, c'est-à-dire à grande vitesse. Lorsque l'interrupteur K1 est ouvert et l'interrupteur K3 est fermé, le moteur M1 tourne à une vitesse réduite (différente de celle obtenue dans le cas où l'interrupteur K1 est fermé et l'interrupteur K3 est ouvert), tandis que le moteur M2 tourne à sa vitesse nominale, c'est-à-dire à grande vitesse.

Notamment, il peut être envisagé que les interrupteurs soient réalisés par des moyens électromécaniques, tels que des relais, ou par des moyens électroniques, tels que des transistors de puissance, pouvant être insérés par exemple dans un module couramment appelé "relais solide".

## Revendications

1. Ensemble comprenant deux moteurs électriques à courant continu (M1,M2) et des moyens de commutation (K1,K2,K3) permettant de raccorder sélectivement les enroulements des deux moteurs à une source de tension continue de façon à obtenir pour chacun d'eux différents régimes de fonctionnement parmi lesquels au moins un régime de rotation à une vitesse inférieure à sa vitesse nominale sous la tension de ladite source, caractérisé en ce qu'il comprend un premier moteur (M1) à quatre balais dont la vitesse nominale est obtenue en reliant des premier et troisième balais (B11,B13) à une première polarité de la source et des second et quatrième balais (B12,B14) à la seconde polarité (+) de la source, le premier balai (B11) étant relié en permanence à la première polarité et les second, troisième et quatrième balais pouvant être reliés aux polarités correspondantes de la source par les moyens de commutation, et un second moteur (M2) à deux balais dont l'un (B21) est relié en permanence à la première polarité et l'autre (B22) à l'un des troisième et quatrième balais du premier moteur.

2. Ensemble selon la revendication 1, caractérisé en ce que l'autre balai (B22) du second moteur (M2) est relié au quatrième balai (B14) du premier moteur (M1).

3. Ensemble selon l'une des revendications 1 et 2, caractérisé en ce que les moyens de commutation comprennent des premier, second et troisième interrupteurs (K1,K2,K3) reliant respectivement les second, troisième et quatrième balais (B12,B13,B14) du premier moteur aux polarités correspondantes de la source.

4. Ensemble selon la revendication 3, caractérisé en ce que les moyens de commutation comprennent en outre des moyens de commande propres à commander l'ouverture simultanée des trois interrupteurs pour obtenir l'arrêt des deux moteurs et la fermeture au moins du premier interrupteur (K1) pour obtenir la rotation de l'un au moins des moteurs.

5. Ensemble selon la revendication 4, caractérisé en ce que les moyens de commande sont propres à commander la fermeture de l'un au moins des second et troisième interrupteurs en même temps que celle du premier.

6. Ensemble selon la revendication 5, caractérisé en ce que les moyens de commande sont propres à commander la fermeture simultanée des trois interrupteurs.

7. Ensemble selon l'une des revendications 4 à 6, caractérisé en ce que les moyens de commande sont propres à commander la fermeture au moins du troisième interrupteur (K3) indépendamment de celle du premier (K1).

8. Ensemble selon l'une des revendications 1 et 2, caractérisé en ce que les moyens de commutation comprennent de premier et second interrupteurs (K1, K3) reliant respectivement les second et quatrième balais (B12, B14) du premier moteur aux polarités correspondantes de la source.

9. Ensemble selon la revendication 8, caractérisé en ce que les moyens de commutation comprennent en outre des moyens de commande propres à commander l'ouverture simultanée des deux interrupteurs (K1, K3) pour obtenir l'arrêt des deux moteurs et la fermeture au moins du premier interrupteur (K1) pour obtenir la rotation de l'un au moins des moteurs.

10. Ensemble selon l'une des revendications précédentes, notamment pour le refroidissement du moteur thermique d'un véhicule automobile, comprenant deux hélices de ventilateurs entraînées respectivement par les deux moteurs.

## Claims

1. A system comprising two direct current electric motors (M1, M2) and switching means (K1, K2, K3) for connecting the windings of the two motors selectively to a source of unidirectional voltage in such a way as to obtain different operating modes for each motor, among which is at least one mode of rotation at a speed lower than its nominal speed at the voltage of the said source, characterised in that it comprises a first motor (M1) having four brushes, the nominal speed of which is obtained by connecting first and third brushes (B11, B13) to a first polarity of the source, and second and fourth brushes (B12, B14) to the second polarity (+) of the source, the first brush (B11) being connected permanently to the first polarity and the second, third and fourth brushes being able to be connected to the corresponding polarities of the source through the switching means, and a second motor (M2) having two brushes, one of which (B21) is permanently connected to the first polarity, while the other one (B22) is connected permanently to one of the third and fourth brushes of the first motor.

2. A system according to Claim 1, characterised in that the other brush (B22) of the second motor (M2) is connected to the fourth brush (B14) of the first motor (M1).

3. A system according to Claim 1 or Claim 2, characterised in that the switching means comprises first, second and third interruptors (K1, K2, K3) connecting the second, third and fourth brushes (B12, B13, B14) of the first motor respectively to the corresponding polarities of the source.

4. A system according to Claim 3, characterised in that the switching means further comprise control means adapted to control the simultaneous opening of the three interruptors in such a way as to cause the two motors to stop and at least the first interruptor (K1) to close, so that rotation of at least one of the motors is obtained.

5. A system according to Claim 4, characterised in that the control means are adapted to control the closure of at least one of the second and third interruptors at the same time as that of the first one.

6. A system according to Claim 5, characterised in that the control means are adapted to control the simultaneous closure of the three interruptors.

7. A system according to one of Claims 4 to 6, characterised in that the control means are adapted to control the closure of at least the third interruptor (K3) independently from that of the first one (K1).

8. A system according to Claim 1 or Claim 2, characterised in that the switching means comprise first and second interruptors (K1, K3) connecting the second and fourth brushes (B12, B14) of the first motor respectively to the corresponding polarities of the source.

9. A system according to Claim 8, characterised in that the switching means further comprise control means adapted to control the simultaneous opening of the two interruptors (K1, K3) in such a way as to cause the two motors to stop, and at least the first interruptor (K1) to close, so that rotation of at least one of the motors is obtained.

10. A system according to one of the preceding Claims, in particular for the cooling of the heat engine of a motor vehicle, including two fan rotors which are driven respectively by the two motors.

## Patentansprüche

1. Konstruktion, bestehend aus zwei elektrischen Gleichstrommotoren (M1, M2) Kommutationsmitteln (K1, K2, K3), um die Wicklungen der beiden Motoren wahlweise an eine Gleichspannungsquelle anzuschließen, so daß sich für jeden von ihnen unterschiedliche Betriebszustände ergeben, unter anderem mindestens ein Drehzahlbereich mit einer Geschwindigkeit, die kleiner als seine Nenndrehzahl unter der Spannung der besagten Spannungsquelle ist, **dadurch gekennzeichnet,** daß sie einen ersten Motor (M1) mit vier Bürsten enthält, dessen Nenndrehzahl dadurch herbeigeführt wird, daß eine erste und dritte Bürste (B11, B13) mit einem ersten Pol der Spannungsquelle und eine zweite und vierte Bürste (B12, B14) mit dem zweiten Pol (+) der Spannungsquelle verbunden werden, wobei die erste Bürste (B11) ständig mit dem ersten Pol verbunden ist, während die zweite, dritte und vierte Bürste durch die Kommutationsmittel mit den entsprechenden Polen der Spannungsquelle verbunden werden können, und aus einem zweiten Motor (M2) mit zwei Bürsten, von denen eine (B21) ständig mit dem ersten Pol und die andere (B22) entweder mit der dritten oder mit der vierten Bürste des ersten Motors verbunden ist.

2. Konstruktion nach Anspruch 1, **dadurch gekennzeichnet,** daß die andere Bürste (B22) des zweiten Motors (M2) mit der vierten Bürste (B14) des ersten Motors (M1) verbunden ist.

3. Konstruktion nach einem der Ansprüche 1 und 2, **dadurch gekennzeichnet,** daß die Kommutationsmittel einen ersten, zweiten und dritten Schalter (K1, K2, K3) umfassen, welche die zweite, dritte bzw. vierte Bürste (B12, B13, B14) des ersten Motors mit den entsprechenden Polen der Spannungsquelle verbinden.

4. Konstruktion nach Anspruch 3, **dadurch gekennzeichnet,** daß die Kommutationsmittel außerdem Steuerungsmittel umfassen, mit denen das gleichzeitige Öffnen der drei Schalter gesteuert werden kann, um die Abschaltung der beiden Motoren herbeizuführen, und das Schließen wenigstens des ersten Schalters (K1), um das Drehen wenigstens eines der Motoren herbeizuführen.

5. Konstruktion nach Anspruch 4, **dadurch gekennzeichnet,** daß die Steuerungsmittel in der Lage sind, das Schließen wenigstens des zweiten oder des dritten Schalters gleichzeitig mit dem Schließen des ersten Schalters zu steuern.

6. Konstruktion nach Anspruch 5, **dadurch gekennzeichnet,** daß die Steuerungsmittel in der Lage sind, das gleichzeitige Schließen der drei Schalter zu steuern.

7. Konstruktion nach einem der Ansprüche 4 bis 6, **dadurch gekennzeichnet,** daß die Steuerungsmittel in der Lage sind, das Schließen wenigstens des dritten Schalters (K3) unabhängig von dem des ersten Schalters (K1) zu steuern.

8. Konstruktion nach einem der Ansprüche 1 und 2, **dadurch gekennzeichnet,** daß die Kommutationsmittel einen ersten und zweiten Schalter (K1, K3) umfassen, welche die zweite bzw. vierte Bürste (B12, B14) des ersten Motors mit den entsprechenden Polen der Spannungsquelle verbinden.

9. Konstruktion nach Anspruch 8, **dadurch gekennzeichnet,** daß die Kommutationsmittel außerdem Steuerungsmittel umfassen, die in der Lage sind, das gleichzeitige Öffnen der zwei Schalter (K1, K3) zu steuern, um die Abschaltung der zwei Motoren herbeizuführen, und das Schließen wenigstens des ersten Schalters (K1), um das Drehen wenigstens eines der Motoren herbeizuführen.

10. Konstruktion nach einem der vorangehenden Ansprüche, insbesondere für die Kühlung des Verbrennungsmotors eines Kraftfahrzeugs, die zwei Lüfterräder enthält, welche jeweils durch einen der beiden Motoren angetrieben werden.
